(19) Europäisches Patentamt / European Patent Office / Office européen des brevets

(11) **EP 3 447 963 A1**

(12) **EUROPEAN PATENT APPLICATION**

(43) Date of publication:
**27.02.2019 Bulletin 2019/09**

(51) Int Cl.:
***H04L 9/00*** (2006.01)

(21) Application number: **17187751.7**

(22) Date of filing: **24.08.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Skeyecode**
**75008 Paris (FR)**

(72) Inventor: **PITEL, Guillaume**
**94240 L'Hay Les Roses (FR)**

(74) Representative: **de Roquemaurel, Bruno et al**
**Omnipat**
**24 place des Martyrs de la Résistance**
**13100 Aix en Provence (FR)**

(54) **METHOD FOR PROTECTING DATA**

(57)    The invention relates to a method for encoding or decoding data, the encoding method comprising generating a data structure (GCD) defining a Boolean circuit comprising a memory (MEM) storing original data, circuit inputs (SLi, RDj) and outputs (Vi), logic gates (OG), and wires interconnecting the circuit inputs, the logic gates and the circuit outputs, the memory comprising for each bit of the original data, a memory cell (MCi) comprising a logic gate performing a logic operation depending on a value of the bit, the Boolean circuit being configured to receive input data (SLi, RDj) for selecting and reading a memory cell, and to provide a binary data (Vi) of a bit read in the selected memory cell and address data of the bit in the original data, the generation of the data structure comprising: generating a valid data for each binary state of each of the wires of the Boolean circuit, and computing truth table values of the logic gates as a function of the valid data of the input and output wires of the logic gate and the logic operation of the logic gate.

Fig. 4

EP 3 447 963 A1

**Description**

TECHNICAL FIELD

The present invention relates generally to the technical field of data communication and storage. Specifically, the invention relates to cryptographic methods and systems that allow for encoding and decoding of data, the encryption being performed in a way preventing unauthorized access or modification to the encoded data.

BACKGROUND

Data encryption is known that uses streaming ciphers, block ciphers or one time pads. Streaming and block ciphers are widely used even though they are not mathematically provable to be 100% secure. These can use asymmetric (or public key) cryptography. The keys are typically of a fixed size and may be static. A calculation is done one each side to encrypt or decrypt the data. In a typical public key scenario, a sender uses the public key of a public-key and private-key pair to encrypt a message. The receiver uses the corresponding private key to decrypt the message. Security is provided because it is generally computationally infeasible to derive the private key from the public key.

One-time pad (OTP) is a symmetric encryption using a key having the same size as a plaintext message to encrypt. The encryption of the message is performed by combining each plaintext symbol with a respective key symbol, a key symbol being never used twice. Because the key is the same size as the plaintext, every possible plaintext is equally likely and it is difficult for an attacker to tell when the correct decryption has been derived. Some streaming ciphers attempt to approximate a pseudo One Time Pad operation. In such scenarios, the transmitter and receiver independently but synchronously generate the same key. Because the keys are calculated and therefore not truly random, they are insecure and they can sometimes be cracked but may provide adequate security depending on the context and cryptographic algorithms used.

Even in systems that are still considered as secure now, history has shown exploits will be found over time. Accordingly further improvements are desirable.

Therefore there is a need to propose a new data encoding scheme that does not rely only on an encryption key, and that can have an easily adjustable security level.

SUMMARY

A method is disclosed for encoding data, comprising generating a data structure defining a Boolean circuit comprising a memory storing original data, circuit inputs, circuit outputs, logic gates, and wires interconnecting the circuit inputs, the logic gates and the circuit outputs, the memory comprising for each bit of the original data, a memory cell comprising a logic gate performing a logic operation depending on a value of the bit, the Boolean circuit being configured to receive input data for selecting and reading a memory cell in the memory, and to provide a binary data defining a value of a bit read in the selected memory cell and address data defining a position of the bit in the original data, the generation of the data structure comprising: generating a valid data representing each binary state of each of the wires of the Boolean circuit, and computing for each logic gate of the Boolean circuit, truth table values as a function of the valid data of the wires connected to the inputs of the logic gate, the valid data of the wire connected to the output of the logic gate and the logic operation performed by the logic gate.

Another method is disclosed for decoding data comprising: reading a data structure defining a Boolean circuit comprising a memory storing original data, circuit inputs, circuit outputs, logic gates, and wires interconnecting the circuit inputs, the logic gates and the circuit outputs, the memory comprising for each bit of the original data, a memory cell comprising a logic gate performing a logic operation depending on a value of the bit, the data structure comprising a valid data representing each binary state of each of the inputs of the Boolean circuit, and for each logic gate of the Boolean circuit, truth table values depending on the operation performed by the logic gate, and executing the Boolean circuit for combinations of valid data of the inputs of the Boolean circuit, each execution of the Boolean circuit comprising applying valid input data to the circuit inputs to select and read one of the memory cells in the memory, and computing output values of each gate of the Boolean circuit from the truth table values of the logic gate and the values of the wires connected to the inputs of the logic gate, each execution of the Boolean circuit providing a binary data defining a value of a bit read in the selected memory cell and address data defining a position of the bit in the original data.

According to an embodiment, each bit of the original data is computed from binary data stored in several of the memory cells.

According to an embodiment, each of the memory cells of the software component comprises a logic gate having an input inverted or not, depending on the bit value stored by the memory cell.

According to an embodiment, the Boolean circuit comprises an address converting circuit configured to provide the address data of the bit as a function of circuit inputs provided to the Boolean circuit.

According to an embodiment, the Boolean circuit is configured to select and read several memory cells simultaneously, and to provide binary data defining values of bits read in the selected memory cells and one address data.

According to an embodiment, the circuit inputs comprise: selection signal inputs, each memory cell being connected to a single selection signal input, or address signals inputs, the Boolean circuit comprising an address decoding circuit providing selection signals as a function of signals applied to the address signals inputs, each memory cell receiving a single selection signal.

According to an embodiment, the Boolean circuit comprises an interconnection matrix randomly defined, the interconnection matrix connecting: inputs of the Boolean circuit to memory cells of the Boolean circuit such that the bit values stored in the memory are randomly distributed in the memory, the number of read signal inputs being randomly defined, and/or two gate layers of the Boolean circuit.

According to an embodiment, the encoding or decoding method further comprises applying a computation to the data and to the address data, provided by one execution of the Boolean circuit, to obtain a bit value of the original data and the position of the bit value in the original data.

According to an embodiment, computing output values of each logic gate of the Boolean circuit involves a secret key.

Embodiments may also relate to a computing device for encoding data, configured to generate a data structure defining a Boolean circuit comprising a memory storing original data, circuit inputs, circuit outputs, logic gates, and wires interconnecting the circuit inputs, the logic gates and the circuit outputs, the memory comprising for each bit of the original data, a memory cell comprising a logic gate performing a logic operation depending on a value of the bit, the Boolean circuit being configured to receive input data for selecting and reading a memory cell in the memory, and to provide a binary data defining a value of a bit read in the selected memory cell and address data defining a position of the bit in the original data, the generation of the data structure comprising: generating a valid data representing each binary state of each of the wires of the Boolean circuit, and computing for each logic gate of the Boolean circuit, truth table values as a function of the valid data of the wires connected to the inputs of the logic gate, the valid data of the wire connected to the output of the logic gate and the logic operation performed by the logic gate.

According to an embodiment, the computing device is configured to encode data by implementing the previously defined encoding method.

Embodiments may also relate to a computing device for decoding data, configured to: read a data structure defining a Boolean circuit comprising a memory storing original data, circuit inputs, circuit outputs, logic gates, and wires interconnecting the circuit inputs, the logic gates and the circuit outputs, the memory comprising for each bit of the original data, a memory cell comprising a logic gate performing a logic operation depending on a value of the bit, the data structure comprising a valid data representing each binary state of each of the inputs of the Boolean circuit, and for each logic gate of the Boolean circuit, truth table values depending on the operation performed by the logic gate, and execute the Boolean circuit for combinations of valid data of the inputs of the Boolean circuit, each execution of the Boolean circuit comprising applying valid input data to the circuit inputs to select and read one of the memory cells in the memory, and computing output values of each gate of the Boolean circuit from the truth table values of the logic gate and the values of the wires connected to the inputs of the logic gate, each execution of the Boolean circuit providing a binary data defining a value of a bit read in the selected memory cell and address data defining a position of the bit in the original data.

According to an embodiment, the computing device is configured to decode data by implementing the previously defined decoding method.

Embodiments may also relate to a computer program product loadable into a computer memory and comprising code portions which, when carried out by a computer, configure the computer to carry out the previously defined encoding or decoding method.

BRIEF DESCRIPTION OF THE DRAWINGS

Examples of the method and/or device may be better understood with reference to the following drawings and description, presented for illustration purposes only. Non-limiting and non-exhaustive descriptions are described with the following drawings.

Figure 1 is a block diagram of user terminals performing transactions with remote servers;
Figure 2 is a block diagram of a user terminal;
Figure 3 is a block diagram of a garbled circuit implemented by software, forming encoded data, according to an embodiment,
Figure 4 is a block diagram of a memory of the garbled circuit of Figure 3, according to an embodiment,
Figures 5A, 5B are block diagrams of an example of memory cell of the memory of figure 4, the memory cells having different states in Figures 5A and 5B,

Figure 6 is a block diagram of a circuit of the memory of Figure 4, according to an embodiment;

Figures 7 to 9 are block diagrams of the memory of the garbled circuit of Figure 3, according to other embodiments,

Figure 10 is a block diagram of a garbled circuit implemented by software, forming encoded data, according to another embodiment,

Figure 11 is a block diagram of a data structure defining the garbled circuit of Figure 4, 7, 8 or 9, according to an embodiment;

Figure 12 is a block diagram of an application implementing the garbled circuit of figure 3 or 10, for decoding data, according to an embodiment;

Figure 13 is a block diagram of an application encoding data to produce the data structure of Figure 11,

Figure 14 is a block diagram illustrating parts of the application of figure 12.

DETAILED DESCRIPTION

In the figures, like referenced signs may refer to like parts throughout the different figures unless otherwise specified.

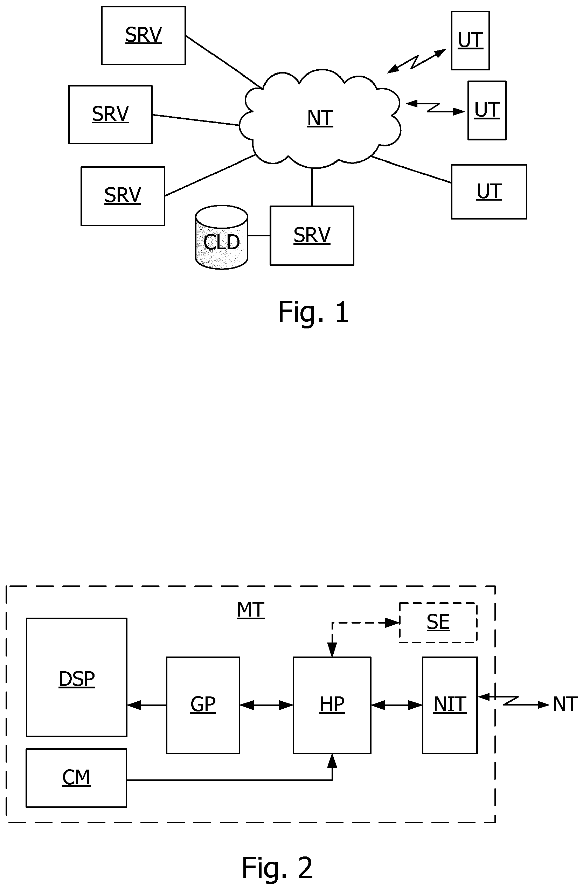

Figure 1 represents user terminals UT that can have access to secret data stored by remote servers through communication networks NT. In the following, the term "user terminal" shall be synonymous and refer to any device that can communicate with one or more remote servers such as application servers and service provider servers. Thus, a user terminal can be for instance a mobile phone, a smartphone, a personal computer, a payment terminal or a digital tablet equipped with communication circuits. The communications networks may include IP (Internet Protocol) networks, such as Internet, mobile or cellular networks, wireless networks, or any kind of network that can be used to establish a communication link between a user terminal and a remote server.

Figure 2 represents a conventional terminal UT, comprising communication circuits NIT for communicating with a remote server such as the server ASRV, through a transmission network such as the network NT. The terminal UT can be a cellular phone, a smartphone or a PDA (Personal Digital Assistant) or any other device such as a digital tablet or a personal computer including communication circuits to be connected to a network such as Internet network. The user terminal UT further comprises a main processor HP (also called "Central Processing Unit" - CPU) connected to the communication circuits NIT, a display screen DSP, a graphic processor GP connected to the processor HP and controlling the display screen DSP, and a control device CM connected to the processor HP. The control device can include a keyboard or keypad, or a touch-sensitive surface, e.g. transparent and disposed on the display screen DSP. The control device CM can further include a pointing device such as a mouse, a pencil or a pen.

The terminal UT can further comprise a secure element SE, such as a secure processor that can be standalone or embedded into a smartcard UICC. The secure processor SE can be for example a SIM ("Subscriber Identity Module") card, providing an access to a cellular network. The secure processor SE can include an NFC ("Near Field Communication") circuit to communicate with a contactless reader. The NFC circuit can be embedded into a SIM card (SIM-NFC) or UICC, or in a SoC ("System on Chip") circuit, or in an external memory card, for example an "SD card". The circuits NIT can include a mobile telecommunication circuit giving access to a mobile cellular network and/or to the Internet network, through the cellular network, and/or a wireless communication circuit (Wi-Fi™, Bluetooth™, ...), and/or any other wired or wireless connection circuit that can be linked to a data transmission network such as Internet.

According to an embodiment, original data are encoded in the form of a data structure describing a Boolean circuit and input data thereof. The Boolean circuit is encrypted as a garbled circuit. The Boolean circuit has a topology in the form of a finite directed acyclic graph. Accordingly, it comprises logic gates arranged in layers that can be executed sequentially, the inputs of the gates in one of the layers of the Boolean circuit being connected to outputs of gates of a previous layer or to inputs of the Boolean circuit, and the outputs of the Boolean circuit being connected to outputs of logic gates of the Boolean circuit. The gates in one layer can be executed sequentially or in parallel.

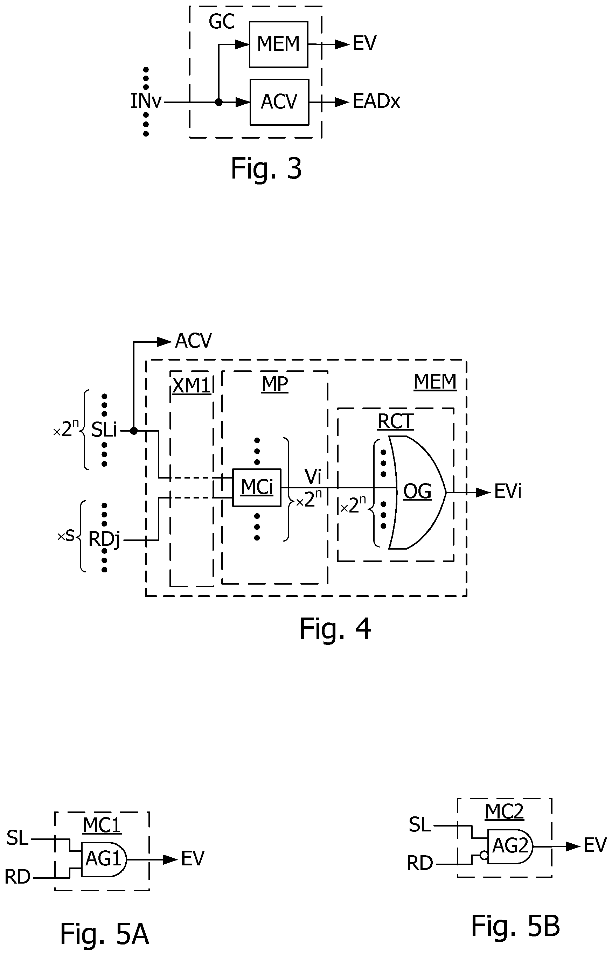

Figure 3 illustrates such a Boolean circuit GC comprising a memory MEM and an address converter ACV, according to an embodiment. The circuit GC receives input signals INv and provides a data piece value EV read from the memory MEM and address data EADx, defining a position of the data piece value EV in original or decoded data, the data piece value being EV selected and read from the memory MEM using the input signals INv. The address converter ACV can be a circuit performing a permutation operation where each different combination of the input signals INv corresponds to an address data EADx provided by the circuit ACV. According to examples, the circuit ACV can implement one or more rounds of an encryption algorithm such as AES (Advanced Encryption Standard), or can be a memory (or a part of the memory MEM) storing addresses of the data pieces in the original data.

Figure 4 illustrates the memory MEM, according to an embodiment. The memory comprises a memory plane MP and a read circuit RCT. The memory plane MP comprises memory cells MCi each storing a binary data. The output of each memory cell MCi is connected to an input of the read circuit RCT. Each memory cell MCi can be selected to be read by a selection signal SLi and outputs its value EVi when it is selected and receives a read signal RDj. Since the memory MEM is a part of the circuit GC of figure 3, the inputs INv of the circuit GC include the inputs SLi, RDj of the memory MEM. The read circuit RCT can include a logic OR gate OG comprising an input connected to each memory cell MCi of the memory plane MP. In the example of Figure 4, the memory plane MP comprises $2^n$ memory cells MCi. The memory plane MP receives $2^n$ selection signals SLi and read signals RDj. The gate OG comprises $2^n$ inputs. The selection signals SLi are defined such that a single memory cell MCi of the memory plane MP is selected at a time to be read. Therefore, all signals received by the gate OG from non-selected memory cells are in an inactive binary state, and a single signal EVi from the selected memory cell MCi received by the gate OG can be at an active or inactive binary state, depending on the binary value stored in the memory cell MCi.

The memory MEM can further include an interconnection matrix XM1 connected between the inputs SLi, RDj of the memory MEM and the memory plane MP. The interconnection matrix XM1 randomly distributes the selection signals SLi and the read signals RDj to the memory cells MCi, such that each selection signal SLi is provided to a single memory cell MCi, but that some of the read signals RDj can be provided to several memory cells of the memory plane MP. Thanks to the use of the interconnection matrix XM1, the selection signal SLi is not necessarily input to a memory cell MCi of a same rank i, but can be provided to any memory cell MCk with k different from i. Each of the read signals RDj can be provided to one or more of the memory cells MCi in the memory plane MP of any ranks i. Therefore the number s of read signals RDj provided to the memory plane MP is comprised between 2 (for the two binary states) and $2^n$. As a result, the data pieces of the original data stored in the memory MEM can be randomly distributed in the memory cells MCi.

According to another example, the read signal inputs RDj of the Boolean circuit GC can be combined together by logic gates which output read signals applied to the memory cells MCi. Therefore, the number s of read signals RDj provided to the Boolean circuit can be greater than the number of memory cells MCi in the memory plane MP.

Figures 5A, 5B illustrate an example of memory cells MC1, MC2 storing two different binary values, respectively. Each of the memory cells MC1, MC2 comprises a logic AND gate AG1, AG2 with two inputs receiving respectively a selection signal SL and a read signal RD. To store different binary values, the input receiving the read signal RD is inverted in the gate AG2 whereas it is not inverted in the gate AG1. When the active state of the selection signal SL is set to 1, the memory cells MC1, MC2 can be considered as storing a 1 and a 0, respectively, when the active state of the read signal RD is set to 1. Conversely, the memory cells MC1, MC2 can be considered as storing a 0 and a 1, respectively, when the active state of the read signal RD is set to 0. The active state of the selection signal SL can be set to 0 by using for example a memory cell including a logic AND gate with an inverted input for the selection signal SL.

Other types of logic gates can be used instead of AND gates for the memory cells MCi. In one example, the memory cells can include a logic NAND gate with the input of the read signal RD inverted or not depending on the binary data stored by the memory cell. In another example, the memory cells can also include a logic OR or NOR gate with the input of the read signal RD inverted or not depending on the binary data stored by the memory cell. The output value of a memory MC cell can be also at 0 for storing a 1, provided that the output of the memory cell is connected to an inverted input of the or gate OG. The memory cells can also have their selection signal input SL inverted.

In addition, all the memory cells of the memory plane MP do not have necessarily the same types such as the ones disclosed in Figures 5A, 5B. The memory plane MP can be formed with different types of logic gates and the selection and read signals SLi, RDj do not have necessarily the same active states for all memory cells of the memory plane MP.

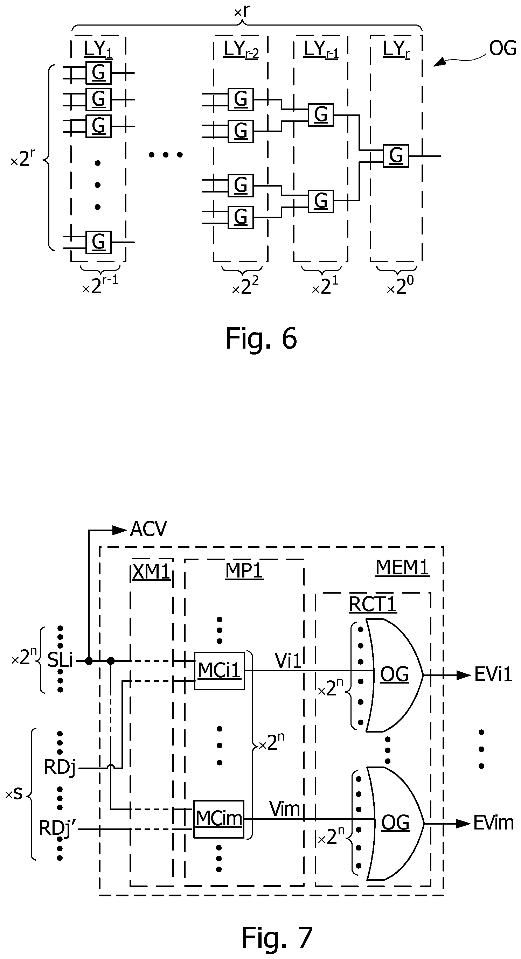

Figure 6 illustrates a circuit that can implement the gate OG of the read circuit RCT, using only logic gates G having two inputs and one output. The circuit of Figure 6 comprises $2^r$ inputs and one output. For this purpose, the circuit OG comprises r layers $LY_1$, ... $LY_{r-2}$, $LY_{r-1}$, $LY_r$ of gates G, the first layer $LY_1$ including $2^{r-1}$ gates G, the layer $LY_k$ comprising $2^{r-k}$ gates G (k = 1, ... r), and the last layer $LY_r$ comprising only one gate G providing the output of the circuit RCT. The outputs of the gates G of each layer $LY_k$ are connected to the inputs of the gates G of the following layer $LY_{k-1}$. In the case of the circuit RCT, the gates G can be logic OR gates and/or logic NAND gates.

Figure 7 illustrates a memory MEM1, according to another embodiment. The memory MEM1 differs from the memory MEM in that a read operation outputs the values EVi1, ..., EVim of m memory cells, simultaneously. For this purpose, the memory MEM1 comprises a memory plane MP1 including m x n memory cells MCik (i = 1, ..., n and k = 1, ..., m) and a read circuit RCT1 configured to provide the data piece values EVi1... EVim stored in m memory cells MCi1, ... MCim, simultaneously. The selection signals SLi and/or the connections between the selection signals SLi inputs of the memory MEM1 and the memory cells are configured to simultaneously select m memory cells MCi1, ..., MCim. The read circuit RCT1 includes one OR gate OG for each selected memory cell MCi1, ..., MCim, i.e. m gates OG. The memory MEM1 comprises $2^n$ selection signal inputs SLi and s read signal inputs RDj. When the memory MEM1 is a part of the circuit GC of figure 3, the inputs INv of the circuit GC include the inputs SLi, RDj of the memory MEM1, and the output values EV of the circuit GC are words of m bits EVi1... EVim. The memory MEM1 can also include the interconnection matrix XM1.

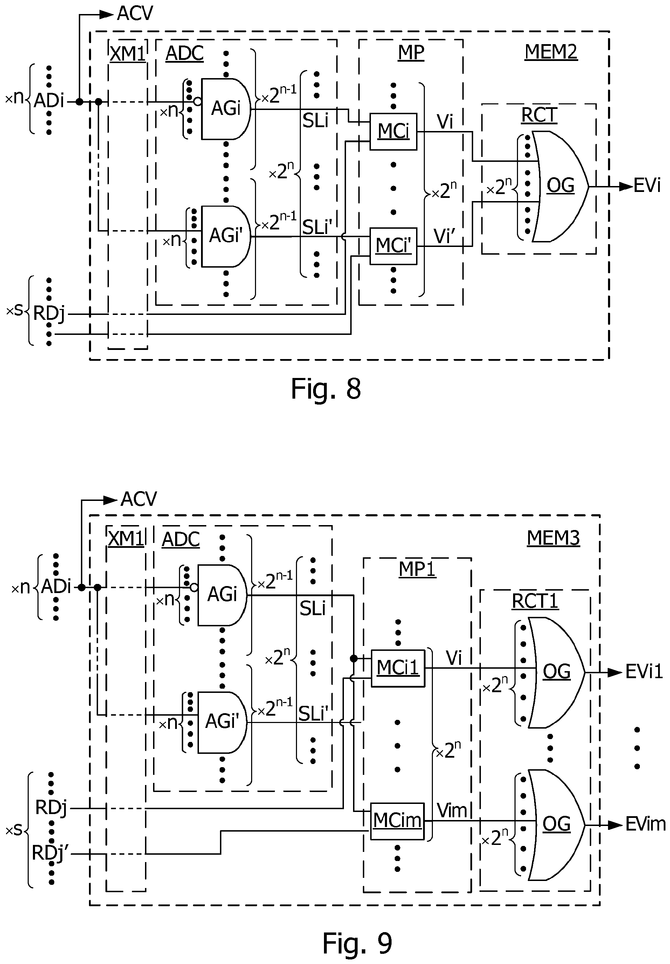

Figure 8 illustrates a memory MEM2, according to another embodiment. The memory MEM2 differs from memory MEM by the presence, in the memory MEM2, of an address decoding circuit ADC producing the $2^n$ selection signals SLi as a function of n address signals ADi. The address decoder ADC comprises $2^n$ AND gates AGi, each gate having n inputs and one output providing a respective selection signal SLi to a memory cell MCi in the memory plane MP. Each address signal ADi is provided to an inverted input of one half of the gates AGi, i.e. $2^{n-1}$ gates AGi, and to a non-inverted input of the other half of the gates AGi. One of the gates AGi has only inverted inputs and one of the gates AGi has only non-inverted inputs. Each of the gates AGi can have the structure disclosed in Figure 6 with the gates G being logic AND gates and $2^{r-1} < n \leq 2^r$, the gates G of the first layer $LY_1$ having inverted and/or non-inverted inputs, according to the number of inverted inputs and non-inverted inputs of the gate AGi to realize. When the memory MEM2 is a part of the circuit GC of figure 3, the inputs INv of the circuit GC include the inputs ADi, RDj of the memory MEM2.

Figure 9 illustrates a memory MEM3, according to another embodiment. The memory MEM3 differs from memory MEM2 in that each address ADi selects m memory cells MCi1, ..., MCim, and in that it includes the read circuit RCT1 configured to read the m selected memory cells MCi1, ..., MCim, simultaneously, and to provide m memory cell values EVi1, ..., EVim, simultaneously. When the memory MEM3 is a part of the circuit GC of figure 3, the inputs INv of the circuit GC include the $2^n$ inputs ADi and s inputs RDj of the memory MEM3, and the output values EV of the circuit GC from the memory MEM3 are words of m bits.

According to an example, the circuit ACV can be implemented as a garbled circuit realizing one or more rounds of an AES encryption (Advanced Encryption Standard).

According to another example, the circuit ACV can be implemented as the memory MEM1 of Figure 7 or the memory MEM3 of Figure 9 with m = n. In this example, each group of m memory cells MCi stores an address of the data pieces stored in the memory cell(s) selected by the signal SLi or the signals ADi.

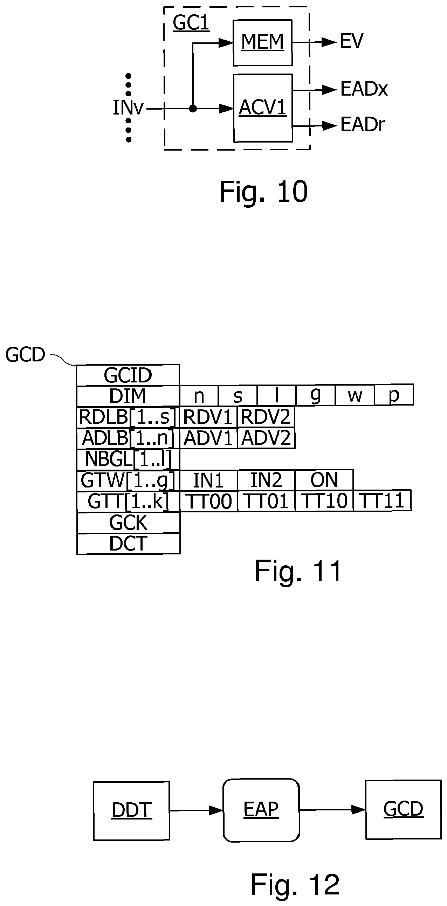

Figure 10 illustrates a Boolean circuit GC1 comprising a memory MEM (or MEM1, MEM2, MEM3) and an address converting circuit ACV1, according to another embodiment. The circuit GC1 receives input signals INv and provides a data piece value EV read in the memory MEM and address data EADx defining a position of the data piece value EV in an original data array, the data value EV being selected in the memory MEM (or MEM1, MEM2, MEM3) as a function of the input signals INv (AD or SLi and RDj). According to an embodiment, the address converter ACV1 provides another output EADr specifying a rank of the data piece value EV read in the memory MEM, the corresponding value of the original data array being computed from all values read in the memory and corresponding to the same address data EADx. For instance, each data piece value of the original data is obtained by computing an average value of all values EV read in the memory and corresponding with a same address data EADx. Therefore, the ranks ADr are not necessarily provided by the circuit GC1. The address converter ACV1 is a circuit performing a permutation, each input INv (ADi or SLi) corresponding to a respective pair of address data (EADx, EADr) of the outputs of the circuit ACV1. The number of values EV that can be read in the memory MEM and corresponding to a same address EADx can be not predefined, the original value of the corresponding data piece being a converging limit value which is gradually reached as a function of the number of read values EV for the same address EADx.

According to another example, the circuit GC can be configured to provide for one address EADx points of a Gaussian curve or values EV that are used to compute a histogram, the data piece value corresponding to the highest computed value the Gaussian curve or to the value having the highest occurrence number in the histogram.

Figure 11 illustrates structure and content data GCD defining the circuit GC, according to an embodiment. The data GCD can include:

- a unique identifier GCID of the circuit GC,
- a number set DIM comprising the number n of input values SLi or ADi, the number s of input values RDj, a number I of logic gate layers in the circuit GC, a number g of gates AGi, OG, a number w of wires in the circuit GC, and a number p of binary outputs of the circuit,
- an input data table RDLB comprising all values of the inputs RDj of the circuit GC, for example numbered from 1 to s, as specified for the execution of the circuit GC,
- an input data table ADLB comprising all values of the inputs ADi (or SLi), numbered from 1 to n (or 2n),
- a gate wire table GTW defining two input wires numbers IN1, IN2, an output wire number ON of each logic gate of the circuit GC, the gates of the circuit being numbered from 1 to g,
- a gate truth table comprising four values TT00, TT01, TT10, TT11 for each of the logic gates AG of the circuit GC,
- a secret key GCK, and
- a decoding table.

According to an embodiment, the input values SLi / ADi, RDj, and the output values of each logic gate of the circuit GC, each representing a binary state 0 or 1, are defined by numbers of several bits, for example 16, 32, 64 or 128 bits. In this way, each input and output of a gate within the circuit GC has only two valid values, and all the other possible values, when considering the size in bits of these values, are invalid. When the circuit GC is generated, the two valid values of each input SLi, ADi, RDj, of the circuit GC are randomly chosen, provided that the least significant bit of the two valid values are different, these least significant bits being used, when computing the output value of each of the logic gates of the circuit GC, to select one value in the truth GTT[k] table of the logic gate.

The table NBGL defines a number of gates in each layer.

The truth table GTT[k] of each logic gate k, comprises four values TT00, TT01, TT10, TT11, each corresponding to a combination (0, 0), (0, 1), (1, 0), (1,1) of binary states of the input values of the logic gate. The topology of the circuit GC may be defined in the table GTW, by numbering each wire of the circuit, i.e. each input wire of the circuit GC from 1 to (n+s) and each output of the logic gates from (n+s+1) to (n+s+g), and by associating to each logic gate one record in the table GTW comprising two wire numbers IN1, IN2 of the two inputs of the gate and one wire number ON to the output of the gate. The wire numbers of the outputs of the circuit GC are numbered from (n+s+g-p+1) to (n+s+g).

According to an embodiment, the table RDLB contains both valid values RDV1, RSV2 of each of the input signals RDi, corresponding to the binary states 0 and 1. Each value RDV1, RDV2 can be equal with a same probability to either one or the other of the two valid values of the input signals RDi corresponding respectively to the binary states 0 and 1. In a same way, the table ADLB contains both valid values ADV1, ADV2 of each of the input values ADi (or SLi), corresponding to the logical states 0 and 1. The presence of the two valid values RDV1, RDV2 or ADV1, ADV2, of the inputs RDj, ADi does not reduce the security related to the confidentiality of the encoded data, since the correspondence between each random input value RDV1, RDV2 or ADV1, ADV2, and a binary value 0 or 1 thereof is randomly selected and thus cannot be determined easily.

According to an embodiment, each value in the tables RDLB, ADLB, GTT is encoded by a 128-bit word, and each record of the table GTW is encoded on a 64-bit word, the wire numbers IN1, IN2, ON being encoded on 21-bit words. The table GTW can be stored and transmitted in a compressed form, for example using the gzip compression scheme.

According to an embodiment, the order of the logic gates in the gate tables GTW, and GTT can be defined randomly, provided that the table records GTW[k] and GTT[k] at the index k refer to the same gate.

It can be observed that the wire values do not have necessarily the same size (same number of bits). Thus the values TT00, TT01, TT10 and TT11 in the table GTT do not have necessarily the same size as the input values used for selecting one of the values in the table GTT. Since both valid values corresponding to the binary values of the input values (provided in the tables RDLB and ADLB) are stored in the data structure GCD, these valid values can be generated with a reduced size such as 8 bits or less.

The structure of the circuit GC arranged in successive gate layers enables parallel processing, since all logic gates in a same gate layer can be processed at the same time. The circuit GC can further include an interconnection matrix between two gate layers of the circuit GC. Each of the logic gates of a second layer of the circuit receives two input values selected by one interconnection matrix among the inputs of the circuit GC and the outputs of gates of one of the previous gate layers of the circuit GC.

Figure 12 illustrates an application EAP for encoding a data array DDT in the form of the data structure GCD.

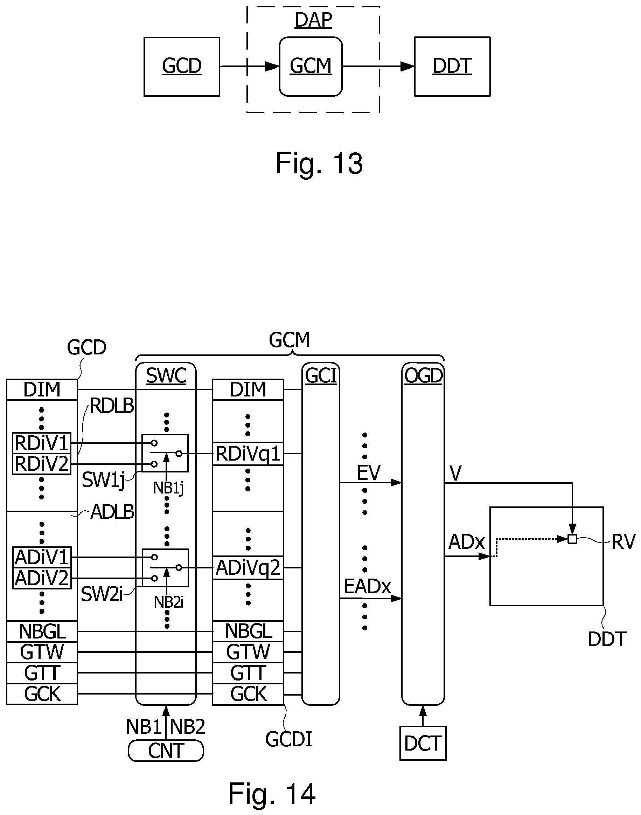

Figure 13 illustrates an application DAP for decoding the data structure GCD, the application including a module GCM configured to execute the circuit GC as defined by the data structure GCD and providing a data array DDT as stored in the memory implemented by the circuit GC. To decode the data encoded in the data structure GCD, the circuit GC is executed for each address that can be defined by the address data ADi, each execution of the circuit GC providing one piece of data of the original data array.

The application EAP and/or the application DAP can be installed in the terminals UT and/or in the servers SRV. According to an example, one of the servers SRV can implement a data bank of encoded data in the form of the data structure GCD, that are accessible to authorized users from a terminal UT having the application DAP. According to another example, an encoded data in the form of the data structure GCD is transmitted from a user terminal UT having the application EAP to another user terminal UT having the application DAP.

Figure 14 illustrates the operation of the module GCM. The module GCM comprises a switching module SWC, a garbled circuit interpreter GCI, and a decoding circuit OGD. The switching module SWC receives the structure and content data GCD defining the circuit GC to be executed, and loads the data to be processed by the circuit GC in an input data structure GCDI. Thus, the switching module SWC transmits the data DIM, NBGL, GTW, GTT and GCK without modification to the structure GCDI.

According to an embodiment, the switching module SWC performs switching operations SW1j, SW2i to select one or the other of the two valid values RDiV1, RDiV2 of each input value RDi, and one or the other of the two valid values ADiV1, ADiV2 of each input value ADi. Each switching function SW1j, SW2i is controlled by a respective bit NB1j, NB2i of numbers NB1, NB2 provided by counters CNT, the number NB1 having s bits, and the number NB2 having n bits when the memory receives the address signal ADi (or $2^n$ bit when the memory receives the selection signal SLi). Each switching operation SW1j, SW2i provides for each of the values RDj, ADi a value RDjVq1, ADiVq2 which is stored in the structure GCDI provided in input of the.

The module GCI is a dedicated interpreting module configured to successively execute the logic gates of each gate layer of the circuit GC, starting with the first gate layer as defined by the data in the input data structure GCDI. To this purpose, the interpreting module GCI can use a wire table receiving the value of each wire of the circuit GC, which is written in the wire table at an index corresponding to the wire number of the wire value. The wire table is first loaded from the data structure GCDI with the input values RDjVq1, ADiVq2 of the circuit GC, written in the table at indexes between 1 and n+s, corresponding to wire numbers assigned to the input values. Then the computed output value of each executed logic gate is written in the wire table at an index corresponding to the wire number of the output value. At the end of the execution of the circuit GC, the wire table comprises the values of the outputs of the circuit GC at indexes from (n+s+g-m+1) to (n+s+g). This process is repeated for each of the input values of the circuit GC by incrementing the counters CNT to load new input values in the data structure GCDI, each execution of the circuit GC providing one data piece EV of the resulting decoded data and address data EADx of the data piece EV in the decoded data.

The output value of each logic gate (value of the output wire of the logic gate) can be computed by applying a non-reversible function applied to both input values of the gate and to one value selected in the truth table of the gate, as a function of the least significant bit of each of the two input values:

$$OV = PF1(IV1, IV2, GIN) \tag{1}$$

where $GIN = GTT[IV1\{0\} // IV2\{0\}]$, PF1 represents the non-reversible function, GTT represents the four-element truth table of the gate, IV1 and IV2 represent the input values of the gate, $IV1\{0\}$ and $IV2\{0\}$ represent the least significant bit of the input values IV1, IV2, and "//" represents the bit concatenation operator.

According to an embodiment, the function PF1 can use an encryption function such as AES (Advanced Encryption Standard) using an encryption key assigned to the circuit GC. In this case, the encryption key GCK can be stored in the structure and content data GCD of the circuit GC or provided separately to users authorized to access the encoded data. For example, the output value OV of a logic gate can be computed as follows:

$$OV = AES(GCK, K) \oplus K \oplus GIN \tag{2}$$

with $K = CF(IV1, IV2) \oplus T$, "$\oplus$" represents the Exclusive OR (XOR) operator, T represents a number assigned to logic gate, for example the number of the logic gate, and can also depend on the values of the inputs IV1, IV2, CF represents a combination function, and AES(GCK, K) represents an encrypted value of K by the AES encryption algorithm using the encryption key GCK. The combination function can be an XOR operation or an operation in the form:

$$CF(IV1, IV2) = SH(IV1, a) \oplus SH(IV2, b), \tag{3}$$

SH(X,a) representing a left shift operation of X by a number a of bits.

As a result of the selection of one of the two valid values RDjV1, RDjV2 of the read signals RDj, and one of the two values ADiV1, ADiV2 of the address signal ADi, one memory cell MCi (MEM, MEM2) or m memory cells MCi1, ..., MCim (MEM1, MEM3) are selected and read, and the input address values ADi are converted into bits of address data EADx by the module GCI which provides the values EVi read in the memory and the address data EADx.

The least significant bit of each output data EADx, EVi of the circuit GC provided by the module GCI is considered as one address bit for the data EADx, and one bit of the decoded data for the data EVi. The module OGD combines each output data EADx, EVi (least significant bit of each output data provided by the execution of the circuit GC) with a respective mask bit value DCTi belonging to a decoding table DCT which can be provided with the structure and content data GCD. The combination operation used can be an XOR operation. The respective least significant bits of the output values EADx, EVi of the circuit GC represents white noise since the output values of the circuit GC including the least significant bit thereof are randomly chosen, and thus, the correspondence between the least significant bit of the output data and the bit value of the corresponding binary data is randomly chosen. Thus the data EADx, EVi provided by one execution of the circuit GC are in an encoded form, and are decoded using the table DCT, the decoding operation performed by the module OGD providing an address ADx resulting from decoding the address output data EADx. Then the corresponding decoded value V is stored in an output data DDT at an address defined by the address bits ADx.

The data piece EV read in the memory MEM or MEM2 by one execution of the circuit GC is one bit. Since the execution of the circuit GC requires to execute a large number of operations, the decoding of one bit can take a long time. This time is multiplied by the number of bits of the data to decode. When the data pieces are randomly selected and read in the memory MEM, the data to decode is generally not intelligible before a large proportion of the data pieces of the data to decode are read. For example, when the data to decode represent a color image, the image does not become intelligible before at least 90% of the data pieces are read in the memory MEM. Therefore, even if the key GCK and final mask DCT are known from an unauthorized user, the latter cannot have access to the data in a short time and/or must mobilize a large computing power to decode the data.

The encoding process of data performed by the application EAP includes the generation of a garbled circuit GC, which comprises generating random values representing the binary states 0 and 1 of the input bits and of the output bits of each of the logic gates of the circuit, some of the logic gate outputs corresponding to outputs of the circuit GC. The generation of the circuit can further include randomly selecting one more interconnection matrices XM1, i.e. randomly selecting the links between the inputs of the circuit and the inputs of the logic gates of the circuit, and, for another interconnection matrix, between the outputs of logic gates of one gate layer and the inputs of logic gates of a following gate layer. The generation of the garbled circuit can further include randomly selecting a type of logic gate for each memory cell MCi of the circuit GC.

The generation of the garbled circuit further includes computing the values in the truth tables GTT of the logic gates of the software component, the logic gates of the memory plane MP depending on the data piece values to encode. The values in the truth tables can be encrypted, using the encryption key GCK. According to an example, each four values TT00, TT01, TT10, TT11 (=GTT[IV1{0} // IV2{0}]) of the truth table of a logic gate of the circuit GC can be computed as follows:

$$TT = PF2(IV1, IV2, OV) \qquad (4)$$

for each possible combination of the valid values of the input values IV1, IV2 and the output value OV, when considering the binary states corresponding to the valid values of IV1, IV2 and OV, and the logic operation performed by the logic gate, PF2 representing a non-reversible function. According to the example defined by equation (2), each four values TT of the truth table of a logic gate can be computed as follows:

$$TT = AES(GCK, K) \oplus K \oplus OV \qquad (5)$$

with K = CF(IV1,IV2) ($\oplus$T.

As a consequence, it is very difficult to determine the binary states of the input and output values and the function of the logic gates of the circuit GC. Thus the functioning of the circuit GC cannot be easily determined. For more details on garbled circuits, reference may be made to the document "Foundations of Garbled Circuits", Mihir Bellare, Viet Tung Hoang, Phillip Rogaway, dated October 1, 2012.

When the circuit GC is generated for encoding data, it can be decided to use another bit rank in the values of the wires of the circuit for defining the corresponding binary state of these values. Thus, the bits at the selected bit rank in the input values of a logic gate of the circuit GC are used to select a data in the truth table GTT of the logic gate, and the bits at the selected bit rank in the output values EADx, EV of the circuit GC are extracted and applied to the module OGD. It can be observed that the bit rank defining the binary state of a value of a wire of the circuit GC is not necessarily the same for each gate layer of the circuit GC.

According to one embodiment, encoded data in the form of the circuit data GCD are stored and/or transmitted without the key GCK and/or the decoding mask DCT which are securely stored and/or transmitted to authorized users empowered to access to the data DDT protected by such an encoding.

According to another embodiment, respective parts of the tables RDLB, ADLB, GTW and GTT are transmitted to different users. Thanks to the structure of the encoded data GCD, no partial decoding is possible and the decoding requires a complete content of the data structure GCD. Therefore, the decoding of the encoded data can be performed only when all the users having a part of it pool their respective part to build a complete version of the data structure GCD.

The methods disclosed herein may be implemented by software programs executable by one processor of the user terminal UT, such as the main processor HP (CPU) or at least partially the graphic processor GP.

The methods disclosed herein can be applied to any type of data, such as compressed or uncompressed data such as black and white or color images, video files, audio files, program binary code or interpreted code files, text files, data base files, etc.

Further, the methods disclosed herein are not limited to the use of a secret key GCK for executing the logic gates of the garbled circuit GC, such a secret key being exposed to key theft. For example, in an application where the data have a short validity time, the time required to decode the encoded data in the structure GCD using common data processing devices can be set to a value higher than the validity time of the encoded data. When the encoded data in the structure GCD are shared by several devices having respective parts of the encoded data, each data part can be defined such that none of the devices can decode the data without the other parts of the encoded data. For example, each device can have a respective part of the input data and/or a respective part of the gate layers. A gate layer cannot be executed without the input data thereof even if the execution of the gates does not use a secret key. The input data are unusable without at least the first gate layer. According to another example, all involved devices can have the tables NBGL, GTW and GTT but only a respective part of the alternative values of the input data RDLB, ADLB, such that each device can decode a part of the encoded data.

Further, the methods disclosed herein are not limited to the use of the decoding table DCT. The logic gates providing the output values of the circuit GC can be configured to directly provide the binary values of the gates.

Further, the methods disclosed herein are not limited to garbled circuits comprising gates having only two inputs and one output. Other types of gates with three or more inputs and one or more outputs or receiving data having more than two valid states may be implemented using truth tables having $2^1$ lines, I being the number of inputs of the logic gate.

More generally, the conception of a garbled circuit can be performed by translating a program written in language such as C or C++ into a circuit design language such as VHDL or Verilog to obtain a Boolean circuit formed with logic gates.

The methods disclosed herein provide an encoding process which is fully adjustable in terms of security and decoding time. The security of the encoding is adjustable by using or not a secret key GCK for the execution of the logic gates, and by using or not a decoding table DCT for decoding the output binary data of the Boolean circuit. The decoding time is adjustable by adjusting the number of bits stored in the memory with respect to the number of bits of the data to encode. It may be also observed that the number of different Boolean circuits GC that can encode the same data is almost infinite without the use of different secret keys.

The previously disclosed encoding process can be used to compute a digital signature of data, the signature computations being applied to the structure GCD.

The illustrations described herein are intended to provide a general understanding of the structure of various embodiments. These illustrations are not intended to serve as a complete description of all of the elements and features of apparatus, processors and systems that utilizes the structures or methods described therein. Many other embodiments or combinations thereof may be apparent to those of ordinary skills in the art upon reviewing the disclosure by combining the disclosed embodiments. Other embodiments may be utilized and derived from the disclosure, such that structural and logical substitutions and changes may be made without departing from the scope of the disclosure.

Further, the disclosure and the illustrations are to be considered as illustrative rather than restrictive, and the appended claims are intended to cover all such modifications, enhancements and other embodiments, or combinations thereof, which fall within the true spirit and scope of the description. Therefore, the scope of the following claims is to be determined by the broadest permissible interpretation of the claims and their equivalents, and shall not be restricted or limited by the foregoing description.

**Claims**

1. A method for encoding data, comprising generating a data structure (GCD) defining a Boolean circuit (GC) comprising a memory (MEM) storing original data (DDT), circuit inputs (SLi, ADi, RDj), circuit outputs (EADx, EV), logic gates (AG1, AG2, AGi, OG), and wires interconnecting the circuit inputs, the logic gates and the circuit outputs, the memory comprising for each bit of the original data, a memory cell (MCi) comprising a logic gate performing a logic operation depending on a value of the bit, the Boolean circuit being configured to receive input data (ADiV1, ADiV2, RDiV1, RDiV2) for selecting and reading a memory cell in the memory, and to provide a binary data (EV) defining a value of a bit (RV) read in the selected memory cell and address data (EADx) defining a position (ADx) of the bit in the original data, the generation of the data structure comprising:

   generating a valid data representing each binary state of each of the wires of the Boolean circuit, and computing for each logic gate of the Boolean circuit, truth table values (TT00, TT01, TT10, TT11) as a function of the valid data of the wires connected to the inputs of the logic gate, the valid data of the wire connected to the output of the logic gate and the logic operation performed by the logic gate.

2. A method for decoding data, comprising:

   reading a data structure (GCD) defining a Boolean circuit (GC) comprising a memory (MEM) storing original data (DDT), circuit inputs (SLi, ADi, RDj), circuit outputs (EADx, EV), logic gates (AG1, AG2, AGi, OG), and wires interconnecting the circuit inputs, the logic gates and the circuit outputs, the memory comprising for each bit of the original data, a memory cell (MCi) comprising a logic gate performing a logic operation depending on a value of the bit, the data structure comprising a valid data (RDLB, ADLB) representing each binary state of each of the inputs of the Boolean circuit, and for each logic gate of the Boolean circuit, truth table values (TT00, TT01, TT10, TT11) depending on the operation performed by the logic gate, and executing the Boolean circuit for combinations of valid data of the inputs of the Boolean circuit, each execution of the Boolean circuit comprising applying valid input data (ADiV1, ADiV2, RDiV1, RDiV2) to the circuit inputs to select and read one of the memory cells in the memory, and computing output values of each gate of the Boolean circuit from the truth table values of the logic gate and the values of the wires connected to the inputs of the logic gate, each execution of the Boolean circuit providing a binary data (EV) defining a value of a bit (RV) read in the selected memory cell and address data (EADx) defining a position (ADx) of the bit in the original data.

3. The method of one of claims 1 and 2, wherein each bit of the original data is computed from binary data stored in several of the memory cells.

4. The method of one of claims 1 to 3, wherein each of the memory cells (MCi) of the software component (GC) comprises a logic gate having an input (RD) inverted or not, depending on the bit value (Vi) stored by the memory cell.

5. The method of one of claims 1 to 4, wherein the Boolean circuit (GC) comprises an address converting circuit (ACV) configured to provide the address data (EADx) of the bit (RV) as a function of circuit inputs (SLi, ADi, RDj) provided to the Boolean circuit.

6. The method of one of claims 1 to 5, wherein the Boolean circuit (GC) is configured to select and read several memory cells (MCi1-MCim) simultaneously, and to provide binary data (EVi1-EVim) defining values of bits read in the selected memory cells and one address data (EADx).

7. The method of one of claims 1 to 6, wherein the circuit inputs (SLi, RDj) comprise:

selection signal (SLi) inputs, each memory cell (MCi) being connected to a single selection signal input, or address signals inputs (ADi), the Boolean circuit comprising an address decoding circuit (ADC) providing selection signals (SLi) as a function of signals (ADiV1, ADiV2) applied to the address signals inputs, each memory cell (MCi) receiving a single selection signal.

8. The method of one of claims 1 to 7, wherein the Boolean circuit (GC) comprises an interconnection matrix (XM1) randomly defined, the interconnection matrix connecting:

inputs (RDj) of the Boolean circuit to memory cells (MCi) of the Boolean circuit such that the bit values stored in the memory are randomly distributed in the memory, the number of read signal inputs (RDj) being randomly defined, and/or
two gate layers of the Boolean circuit.

9. The method of one of claims 1 to 8, further comprising applying a computation (OGD) to the data (EV) and to the address data (EADx), provided by one execution of the Boolean circuit, to obtain a bit value (RV) of the original data (DDT) and the position (ADx) of the bit value in the original data.

10. The method of one of claims 1 to 9, wherein computing output values of each logic gate (AG1, AG2, AGi, OG) of the Boolean circuit (GC) involves a secret key (GCK).

11. A computing device for encoding data, configured to generate a data structure (GCD) defining a Boolean circuit (GC) comprising a memory (MEM) storing original data (DDT), circuit inputs (SLi, ADi, RDj), circuit outputs (EADx, EV), logic gates (AG1, AG2, AGi, OG), and wires interconnecting the circuit inputs, the logic gates and the circuit outputs, the memory comprising for each bit of the original data, a memory cell (MCi) comprising a logic gate performing a logic operation depending on a value of the bit, the Boolean circuit being configured to receive input data (ADiV1, ADiV2, RDiV1, RDiV2) for selecting and reading a memory cell in the memory, and to provide a binary data (EV) defining a value of a bit (RV) read in the selected memory cell and address data (EADx) defining a position (ADx) of the bit in the original data, the generation of the data structure comprising:

generating a valid data representing each binary state of each of the wires of the Boolean circuit, and computing for each logic gate of the Boolean circuit, truth table values (TT00, TT01, TT10, TT11) as a function of the valid data of the wires connected to the inputs of the logic gate, the valid data of the wire connected to the output of the logic gate and the logic operation performed by the logic gate.

12. The computing device of claim 11, configured to encode data by implementing the method of one of claims 1 and 3 to 10.

**13.** A computing device for decoding data, configured to:

read a data structure (GCD) defining a Boolean circuit (GC) comprising a memory (MEM) storing original data (DDT), circuit inputs (SLi, ADi, RDj), circuit outputs (EADx, EV), logic gates (AG1, AG2, AGi, OG), and wires interconnecting the circuit inputs, the logic gates and the circuit outputs, the memory comprising for each bit of the original data, a memory cell (MCi) comprising a logic gate performing a logic operation depending on a value of the bit, the data structure comprising a valid data (RDLB, ADLB) representing each binary state of each of the inputs of the Boolean circuit, and for each logic gate of the Boolean circuit, truth table values (TT00, TT01, TT10, TT11) depending on the operation performed by the logic gate, and

execute the Boolean circuit for combinations of valid data of the inputs of the Boolean circuit, each execution of the Boolean circuit comprising applying valid input data (ADiV1, ADiV2, RDiV1, RDiV2) to the circuit inputs to select and read one of the memory cells in the memory, and computing output values of each gate of the Boolean circuit from the truth table values of the logic gate and the values of the wires connected to the inputs of the logic gate, each execution of the Boolean circuit providing a binary data (EV) defining a value of a bit (RV) read in the selected memory cell and address data (EADx) defining a position (ADx) of the bit in the original data.

**14.** The computing device of claim 13, configured to decode data by implementing the method of one of claims 2 to 10.

**15.** A computer program product loadable into a computer memory and comprising code portions which, when carried out by a computer, configure the computer to carry out the method of one of claims 1 to 10.

Fig. 1

Fig. 2

Fig. 3

Fig. 4

Fig. 5A

Fig. 5B

Fig. 6

Fig. 7

Fig. 8

Fig. 9

Fig. 10

| GCID | | | | | | |
|------|-----|-----|-----|-----|-----|-----|
| DIM | n | s | l | g | w | p |
| RDLB[1..s] | RDV1 | RDV2 | | | | |
| ADLB[1..n] | ADV1 | ADV2 | | | | |
| NBGL[1..l] | | | | | | |
| GTW[1..g] | IN1 | IN2 | ON | | | |
| GTT[1..k] | TT00 | TT01 | TT10 | TT11 | | |
| GCK | | | | | | |
| DCT | | | | | | |

Fig. 11

Fig. 12

DAP

GCD → GCM → DDT

# Fig. 13

GCD

GCM

DIM
⋮
RDiV1
RDiV2
⋮
⋮
ADiV1
ADiV2
⋮
NBGL
GTW
GTT
GCK

SWC
⋮
NB1j
SW1j
⋮
NB2i
SW2i
⋮

RDLB
ADLB

DIM
⋮
RDiVq1
⋮
⋮
ADiVq2
⋮
NBGL
GTW
GTT
GCK

GCI
⋮
EV
⋮
EADx
⋮

OGD
V
ADx

RV
DDT

NB1 NB2
CNT

GCDI

DCT

# Fig. 14

Europäisches
Patentamt

European
Patent Office

Office européen
des brevets

# EUROPEAN SEARCH REPORT

Application Number

EP 17 18 7751

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Dahlia Malkhi ET AL: "Fairplay - A Secure Two-Party Computation System", ,<br>1 February 2004 (2004-02-01), XP055448567,<br>Retrieved from the Internet:<br>URL:https://www.cs.huji.ac.il/~noam/fairplay.pdf<br>* sections 3, 4.1 and 4.2; figures 1,2 * | 1-15 | INV.<br>H04L9<br>H04L9/00 |
| X | BEN KREUTER BENJAMIN MOOD COMPUTER SCIENCE DEPT U VIRGINIA COMPUTER AND INFO SCIENCE DEPT U OREGON KEVIN BUTLER COMPUTER AND INFO: "PCF: A Portable Circuit Format For Scalable Two-Party Secure Computation", USENIX,,<br>28 September 2013 (2013-09-28), pages 1-16, XP061008619,<br>[retrieved on 2013-09-29]<br>* sections 4.1 and 4.6; figure 1 * | 1-15 | |

TECHNICAL FIELDS
SEARCHED (IPC)

H04L

The present search report has been drawn up for all claims

| Place of search | Date of completion of the search | Examiner |
|---|---|---|
| Munich | 8 February 2018 | Billet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MIHIR BELLARE ; VIET TUNG HOANG ; PHILLIP ROGAWAY.** *Foundations of Garbled Circuits,* 01 October 2012